# EUROPÄISCHE PATENTSCHRIFT

(11) **EP 3 462 055 B1**
(45) Veröffentlichungstag und Bekanntmachung des Hinweises auf die Patenterteilung: **08.12.2021**
(21) Anmeldenummer: 18196135.0
(22) Anmeldetag: 24.09.2018
(51) Int. Cl.: F16G 1/08, F16G 1/28, F16G 5/06, F16G 5/20, G01B 7/16

(54) **ANTRIEBSRIEMEN**
DRIVE BELT
COURROIE D'ENTRAÎNEMENT

(30) Priorität: 29.09.2017 DE 102017217430
(43) Veröffentlichungstag der Anmeldung: 03.04.2019
(73) Patentinhaber: ContiTech Antriebssysteme GmbH, 30165 Hannover (DE); SynchroTech Antriebstechnik GmbH, 4470 Enns (AT)
(72) Erfinder: Winkler, Thomas, 29451 Dannenberg (DE); Quass, Jan-Henning, 29468 Bergen (DE); Kucharczyk, André, 29499 Gülden (DE); Winkler, Alexander, 4470 Enns (AT); Winkler, Günter, 4470 Enns (AT)
(74) Vertreter: Continental Corporation

(56) Entgegenhaltungen:
- WO-A1-2005/047730
- DE-A1-102012 011 230
- US-A1- 2010 006 401

## Beschreibung

Die Erfindung betrifft eine Aufzugsanlage mit einem Traggurt, wobei der Traggurt als Antriebsriemen aus elastomerem Material mit eingebetteten und in Längsrichtung des Riemens sich erstreckenden Verstärkungselementen bzw. Zugträgern abgebildet ist.

Antriebsriemen dienen in vielerlei Anwendungen und Bereichen dem Antrieb und der Kraftübertragung bei Arbeitsmaschinen, Transportmitteln, Fahrzeugen, etc., und zwar sowohl als umlaufende Antriebsriemen in einem Zugriementrieb als auch als Antriebsriemen endlicher Länge in einem Linearantrieb oder in einer Aufzugsanlage, wie z.B. aus der US 2010/0006401 bekannt.

Insbesondere bei den linearen Antrieben werden mit Hilfe der dort eingesetzten Antriebsriemen Teile der jeweiligen Einrichtung bewegt, so beispielsweise bei einem in mehreren Richtungen bewegten Schlitten einer Arbeitsmaschine, etwa einer Fräsmaschine, oder auch beim angetriebenen Druckkopf eines 3-D-Druckers.

Üblicherweise wird bei solchen Linearantrieben zur Übertragung von Mess- und Steuersignalen zusätzlich ein so genannter "Kabelschlepp" mitgeführt, im Wesentlichen zwischen dem bewegten Teil der Arbeitsmaschine und dem Antrieb bzw. der zentralen Steuerungseinrichtung, die auch die Signale der ebenfalls dort angeschlossenen feststehenden Bedieneinrichtungen verarbeitet. Der Begriff "Kabelschlepp", ursprünglich ein Firmenname, wird mittlerweile im Sinne einer allgemein verständlichen generischen Bezeichnung verwendet und bezeichnet eine Energieführungskette, mit der längere Kabel, Energiezuführungen und Steuerleitungen auf unterstützenden, beweglichen, kettenartigen Halterungen einer bewegten Maschine oder einer fahrbaren Einrichtung nachgeführt wird. Der Kabelschlepp fährt hier also mit dem bewegten Teil der Arbeitsmaschine mit, muss ggf. auch umgelenkt werden und benötigt entsprechenden Bauraum.

Eine solche Energieführungskette unterliegt natürlich den entsprechenden Vorschriften in Bezug auf die Instandhaltung und Wartung und muss regelmäßig überprüft werden, ebenso wie der eigentliche Antrieb über Antriebsriemen. Die Einhaltung solcher Vorschriften erfordert daher regelmäßige Kontrolle und Wartung auch der Energieführungskette und beinhaltet also einen erheblichen zusätzlichen Aufwand.

Für die Erfindung bestand also die Aufgabe, eine Signalübertragung an einer Aufzugsanlage zu ermöglichen, wobei die Signalübertragung eine sichere und präzise Steuerung ermöglicht.

Gelöst wird diese Aufgabe durch die Merkmale des Hauptanspruchs.

Dabei sind innerhalb des Antriebsriemens in Riemenlängsrichtung Signalleitungselemente angeordnet zur Übertragung von Signalen und Daten, vorzugsweise zur Übertragung von Signalen oder Daten zur Steuerung und Überwachung eines Antriebs. Ein separater Kabelschlepp oder Energieführungskette, die als separate Elemente mit sich bewegenden Einrichtungen oder Maschinenteilen mitbewegt und geführt werden müssen, entfallen somit völlig. Dementsprechend kann auch die Wartung für solche Systeme zusammen mit der Wartung für den Antriebsriemen ausgeführt werden.

Eine vorteilhafte Weiterbildung besteht darin, dass elektrisch leitende oder leitfähige Zugträger oder Verstärkungselemente innerhalb eines Antriebsriemens als Signalleitungselemente verwendet werden, vorzugsweise metallisch leitende Zugträger. Damit verwendet man Funktionselemente innerhalb des Antriebsriemens zur Signalübertragung, die sowieso schon für andere Funktionen vorhanden sind. In diesem Falle sind dies die Zugträger, die die Zug- bzw. Antriebskraft des Riemens gewährleisten. Durch eine solche Verfahrensweise erreicht man also einen doppelten Nutzen bei Verwendung eines einzigen Bauteils.

Natürlich können solche metallisch leitende Zugträger auch generell als Leitungselemente zur Energieübertragung genutzt werden, sofern die Energiemenge in Einklang steht mit den entsprechenden Sicherheitsvorschriften. Jedenfalls ist die bei der Signal-oder Datenübertragung erforderliche Energiemenge so gering, dass in aller Regel keine besonderen diesbezüglichen Vorkehrungen hier zutreffend sind.

Die Erfindung besteht darin, dass elektromagnetische Wellen leitende Elemente innerhalb eines Traggurtes oder Tragseiles als Signalleitungselemente verwendet werden, nach der Erfindung als lichtleitende Glasfasern. Damit lassen sich erhebliche Datenmengen übertragen. Die Glasfasern können so dünn ausgebildet werden, dass sie hoch flexibel sind und problemlos über Umlenkrollen laufen können, die evtl. für den Antriebsriemen vorgesehen sind.

Natürlich können auch jegliche andere separate Kabel oder Leitungen zum Transport von Informationen, Daten oder Signalen innerhalb eines Antriebsriemens angeordnet werden, sofern sie die Dehnungen und die Biegungen eines Antriebsriemens problemlos ertragen. Einfache metallische Litzen oder Kabel sind dabei ebenso denkbar wie ummantelte und abgeschirmte Kabelsysteme.

Eine weitere vorteilhafte Ausbildung besteht darin, dass das Einspeisen oder Auslesen der Signale oder Daten zwischen Signalleitungselementen und weitergehenden Leitungen oder Signalverarbeitungseinrichtungen über Kontaktierungen an den jeweiligen endseitigen Anschluss- oder Befestigungspunkten der Signalleitungselemente über Klemmungen oder andere feste Verbindungen erfolgt. Das vereinfacht die Einspeisung und das Auslesen von Daten insofern, als die Einrichtungen dafür auf einfache Weise an relativ zum Antriebsriemen unbewegten Teilen angebracht werden können und so eine sichere Kontaktierung erfolgen kann.

Besonders vorteilhaft lässt sich ein solcher Antriebsriemen einsetzen in einem Zugriementrieb, wenn der Antriebsriemen als Zahnriemen, Keilriemen oder Keilrippenriemen ausgebildet ist und die Signalleitungselemente im Bereich der in Längsrichtung laufenden Zugträger, bzw. zwischen Unterbau und Decklage angeordnet sind. Damit erreicht man sowohl eine sehr gute und teilweise formschlüssige Übertragung von Zugkräften über den Riemen, als auch eine hervorragende Signalleitung, beispielsweise zur Steuerung einer entsprechenden Antriebseinrichtung für einen Zugriementrieb. Es bleibt zu erwähnen, dass natürlich in einem solchen Zugriementrieb ein so ausgebildeter Antriebsriemen auch als besonders widerstandsfähige und haltbare Energieführungskette, also auch als "Kabelschlepp" als solcher verwendbar ist.

Eine weitere vorteilhafte Ausbildung besteht darin, dass bei einem als Linearantrieb ausgebildeten Zugriementrieb ein Antriebsriemen vorgesehen ist, bei dem mindestens einer der Zugträger oder Verstärkungselemente innerhalb des Antriebsriemens als metallisch leitendes oder elektrisch leitfähiges Signalleitungselement ausgebildet ist und das Einspeisen oder Auslesen der Signale oder Daten über endseitige an den Zugträgern angebrachte Kabelklemmen erfolgt. Eine solche überaus einfache Verbindung kann mit herkömmlichen Bauteilen erfolgen und ergibt eine sichere Klemmung und Kontaktierung zur Übertragung der Signale oder Daten an weitere Einrichtungen.

Eine weitere vorteilhafte Ausbildung besteht darin, dass das Einspeisen oder Auslesen der Signale oder Daten in die oder aus den Signalleitungselementen über berührungslos arbeitende und in unmittelbarer Nachbarschaft des Antriebsriemens angeordnete Übertragungselemente erfolgt, vorzugsweise über induktiv arbeitende Elemente oder über Funkantennen. Insbesondere dann, wenn entweder der Antriebsriemen und/oder andere zum Zugriementrieb gehörige Einrichtungen Antennen, Transponder oder Sensoren zur berührungslosen Übertragung aufweisen, bleibt man natürlich sehr variabel im Hinblick auf die Orte zum Auslesen oder Weiterleiten von Signalen oder Daten in die oder aus den im Zugriemen angeordneten Signalleitungselementen. Auf eine solche Weise können auch umlaufende oder vielfach umgelenkte Zugriementriebe, beispielsweise Riementriebe in einer Aufzugsanlage, mit einem erfindungsgemäßen Antriebsriemen versehen werden und dann an einer beliebigen Stelle Daten und Signale eingelesen und an anderer Stelle ausgelesen werden, soweit dies erforderlich ist.

Auch können die Signalleitungselemente und die Signalübertragungseinrichtungen, seien es Antennen oder einfache angeklemmte Einrichtungen, in Form eines CAN-Bus-Systems (Control Area Network) ausgebildet sein, welches Daten oder Signal paketweise und sukzessive über alle Signalleitungselemente des gesamten Zugriementriebs und an die entsprechenden Empfangsstationen verteilt.

Der erfindungsgemäße Antriebsriemen lässt sich so auch in vorteilhafter Weise in einer Aufzugsanlage anwenden, die mindestens eine an einem oder mehreren als Tragmittel ausgebildeten Antriebsriemen, d.h. in diesem Fall an Traggurten oder Tragseilen hängende Aufzugskabine aufweist, wenn das Tragmittel vorzugsweise über seine gesamte Länge ausgebildete Signalleitungselemente aufweist. Die Signalleitungselemente dienen vorzugsweise zur Übertragung von Signalen oder Daten zur Steuerung und Überwachung der Aufzugsanlage zwischen mindestens einer Antriebseinrichtung, einer zentralen Steuerungseinrichtung und/oder mindestens einer Bedienungseinrichtung der Aufzugsanlage.

Dabei kann ein solches Tragmittel in der einfachsten Version an seinen endseitigen Befestigungspunkten oder Klemmungen mit den Signalleitungselementen verbundene Einrichtungen aufweisen zur Übertragung und zum Auslesen oder Weiterleiten von Signalen oder Daten in die oder aus den Signalleitungselementen, also Signalübertragungseinrichtungen, die die durchgeleiteten Signale oder Daten weiterführen, gegebenenfalls unter mindestens teilweiser vorheriger elektronischer Verarbeitung.

In einer anderen Version kann das Tragmittel und/oder andere zur Aufzugsanlage gehörige Einrichtungen Antennen, Transponder oder Sensoren aufweisen zur berührungslosen Übertragung und zum Auslesen oder Weiterleiten von Signalen oder Daten in die oder aus den im Tragmittel angeordneten Signalleitungselementen. Auch hier können die Antennen, Transponder oder Sensoren mit entsprechender Software ausgerüstet werden, die eine mindestens teilweise vor Verarbeitung der entsprechenden erhaltenen Signale zulässt.

Anhand eines Ausführungsbeispiels soll die Erfindung näher erläutert werden. Es zeigen
- Fig. 1: in prinzipieller Darstellung einen erfindungsgemäßen Antriebsriemen im Schnitt,
- Fig. 2: eine perspektivische Darstellung eines erfindungsgemäßen als Zahnriemen ausgebildeten Antriebsriemens mit herausgeführten Zugträgern und einer angeschlossenen Kabelklemme,
- Fig. 3: schematisch eine Ausbildung eines erfindungsgemäßen Antriebsriemens, bei dem die Zugträger als Signalleitungselemente ausgebildet sind.

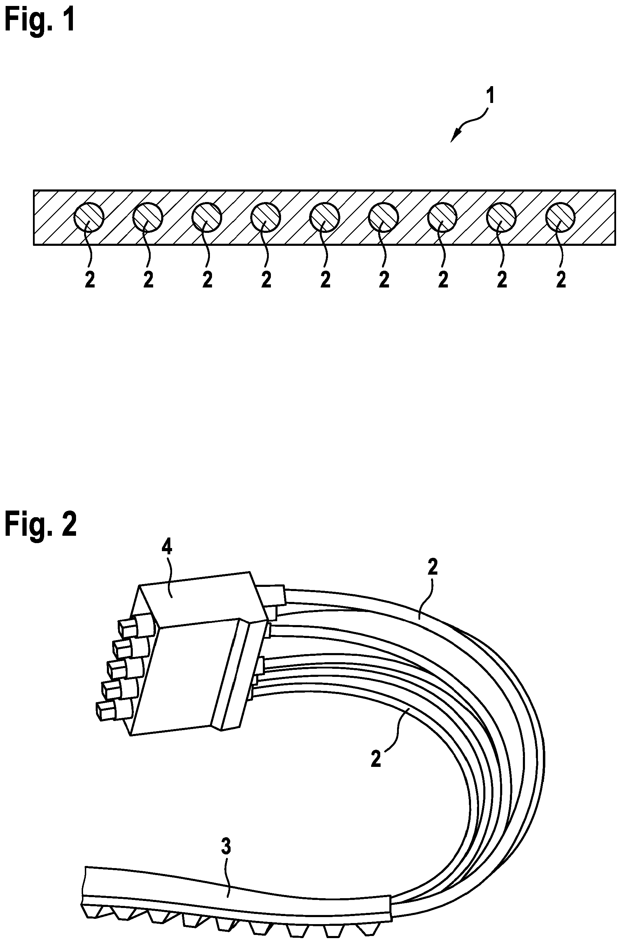

Die Fig. 1 zeigt in prinzipieller Darstellung einen erfindungsgemäßen Antriebsriemen 1 im Schnitt, der mit in Längsrichtung verlaufenden metallischen Festigkeitsträgern 2 versehen ist.

Fig. 2 zeigt eine perspektivische Darstellung eines erfindungsgemäßen als Zahnriemen 3 ausgebildeten Antriebsriemens mit endseitig herausgeführten Zug- bzw. Festigkeitsträgern 2, die hier gleichzeitig als Signalleitungselemente dienen. Die als Signalleitungselemente ausgebildeten Zug- bzw. Festigkeitsträger 2 sind mit einer angeschlossenen Kabelklemme 4 versehen, an die wiederum weitere Leitungen angeschlossen werden können.

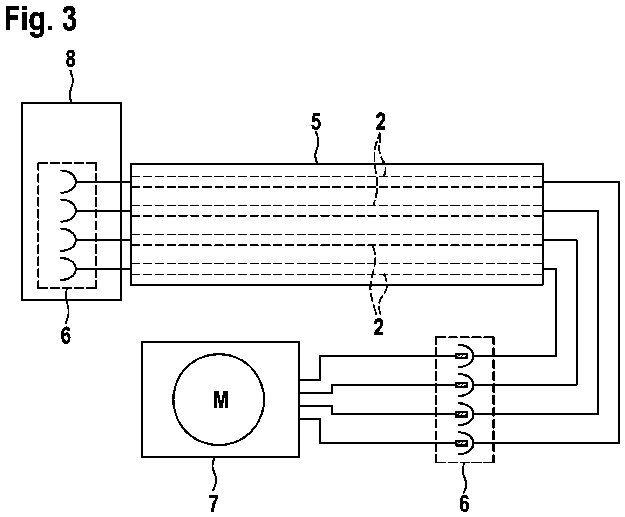

Fig. 3 zeigt noch einmal schematisch die Ausbildung eines erfindungsgemäßen Antriebsriemens 5, bei dem die Zugträger 2 als Signalleitungselemente ausgebildet sind. Die Signalleitungselemente sind über Verbindungen 6, zum Beispiel Klemmen, einerseits an den Antriebsmotor 7 und andererseits an eine Steuerungseinrichtung 8 angeschlossen.

### Bezugszeichenliste

### (Teil der Beschreibung)

- 1: Antriebsriemen
- 2: Festigkeitsträger / Zugträger
- 3: Antriebsriemen, als Zahnriemen ausgebildet
- 4: Kabelklemme
- 5: Antriebsriemen
- 6: Verbindung, Klemmverbindung
- 7: Antriebsmotor
- 8: Steuerungseinrichtung

## Patentansprüche

1. Aufzugsanlage mit einem Traggurt, wobei der Traggurt als Antriebsriemen (1, 3, 5) aus elastomerem Material mit eingebetteten und in Längsrichtung des Riemens sich erstreckenden Verstärkungselementen oder Zugträgern (2) ausgebildet ist, wobei innerhalb des als Traggurt ausgebildeten Antriebsriemens in Riemenlängsrichtung Signalleitungselemente angeordnet sind zur Übertragung von Signalen und/oder Daten, **dadurch gekennzeichnet, dass** die Signalleitungselemente lichtleitende Glasfasern sind.

2. Aufzugsanlage nach Anspruch 1 , bei der der als Traggurt ausgebildete Antriebsriemen an seinen jeweiligen endseitigen Anschlüssen- oder Befestigungspunkten Einrichtungen (4, 6) zur Kontaktierung oder Verbindung mit weiteren Signalübertragungseinrichtungen und zur Weiterleitung der Signale oder Daten aufweist.

## Claims

1. Elevator system with a supporting belt, wherein the supporting belt is designed as a drive belt (1, 3, 5) of elastomeric material with embedded reinforcing elements or tension members (2) extending in the longitudinal direction of the belt, wherein signal-conducting elements are arranged within the drive belt, designed as a supporting belt, in the longitudinal direction of the belt for the transmission of signals and/or data, **characterized in that** the signal-conducting elements are light-conducting glass fibres.

2. Elevator system according to Claim 1, in which the drive belt, designed as a supporting belt, has at its respective end connection points or end fastening points devices (4, 6) for contacting or connecting to further signal-transmission devices and for passing on the signals or data.

## Revendications

1. Installation d'élévateur, comprenant une sangle de suspension, la sangle de suspension étant réalisée sous forme de courroie d'entraînement (1, 3, 5) en matériau élastomère avec des éléments de renforcement ou des couches de traction (2) incorporés et s'étendant dans la direction longitudinale de la courroie, dans laquelle, à l'intérieur de la courroie d'entraînement réalisée sous forme de sangle de suspension, des éléments de ligne de signalisation sont disposés dans la direction longitudinale de la courroie pour transmettre des signaux et/ou des données, **caractérisée en ce que** les éléments de ligne de signalisation sont des fibres de verre guidant la lumière.

2. Installation d'élévateur selon la revendication 1, dans laquelle la courroie d'entraînement réalisée sous forme de sangle de suspension présente au niveau de ses points de raccordement ou de fixation côté extrémité respectifs des dispositifs (4, 6) pour la mise en contact ou la connexion avec d'autres dispositifs de transmission de signaux et pour la retransmission des signaux ou des données.
